# FASCICULE DE BREVET EUROPEEN

(11) **EP 1 295 060 B1**
(45) Date de publication et mention de la délivrance du brevet: **19.01.2005**
(21) Numéro de dépôt: 01949517.5
(22) Date de dépôt: 25.06.2001
(51) Int. Cl.: F16L 1/00

(54) **JOINT FILETE TUBULAIRE APTE A SUBIR UNE EXPANSION DIAMETRALE**
ROHRFÖRMIGE SCHRAUBVERBINDUNG BEFÄHIGT ZUM AUSHALTEN EINER DURCHMESSERMÄSSIGEN AUSDEHNUNG
TUBULAR THREADED JOINT CAPABLE OF BEING SUBJECTED TO DIAMETRAL EXPANSION

(30) Priorité: 30.06.2000 FR 0008510
(43) Date de publication de la demande: 26.03.2003
(73) Titulaire: VALLOUREC MANNESMANN OIL & GAS FRANCE, 59620 Aulnoye-Aymeries (FR)
(72) Inventeur: COULON, Jean-Luc, F-59620 Monceau Saint Waast (FR); NOEL, Thierry, F-59990 Sebourg (FR); ROUSSIE, Gabriel, F-59370 Mons en Baroeuil (FR); VARENNE, Emmanuel, F-69400 Villefranche-sur-Saône (FR)
(74) Mandataire: Pellicani, Félix Angelo
(86) Numéro de dépôt international: PCT/FR2001/002005
(87) Numéro de publication internationale: WO 2002/001102

(56) Documents cités:
- WO-A-01/04520
- WO-A-99/08034
- US-A- 3 870 351
- US-A- 4 611 838
- PATENT ABSTRACTS OF JAPAN vol. 1995, no. 03, 28 avril 1995 (1995-04-28) & JP 06 346988 A (NIPPON STEEL CORP;OTHERS: 01), 20 décembre 1994 (1994-12-20)

## Description

L'invention concerne un joint fileté tubulaire apte à subir une déformation plastique par expansion diamétrale et le joint obtenu après une telle expansion.

On connaît des joints filetés tubulaires réalisés entre deux tubes de grande longueur ou entre un tube de grande longueur et un manchon et utilisés notamment pour constituer des colonnes de tubes de cuvelage (« casings ») ou de production (« tubings ») pour des puits d'hydrocarbures ou pour des puits similaires tels que pour la géothermie.

Traditionnellement les puits sont forés avec des outils de différents diamètres, le haut du puits étant foré à l'aide d'un outil de gros diamètre, de l'ordre par exemple de 500 mm, alors que le fond du puits est foré avec un diamètre plus faible, de l'ordre de 150 mm. Les puits sont de ce fait cuvelés à l'aide de plusieurs colonnes concentriques toutes suspendues depuis la surface, les tubes de plus gros diamètre s'étendant depuis la surface jusqu'à quelques centaines de mètres de profondeur et les tubes de plus petit diamètre s'étendant depuis la surface jusqu'au fond du puits. L'espace entre tubes de cuvelage et le terrain est généralement cimenté.

Lorsque le puits est entièrement foré et cuvelé, une colonne de tubes de production est descendue à l'intérieur de la colonne de tubes de cuvelage de plus faible diamètre pour notamment permettre la remontée des hydrocarbures jusqu'à la surface.

Equiper un puits conduit donc à mettre en oeuvre un grand nombre de tubes de différentes dimensions et les plus minces possibles pour ne pas nécessiter de trop gros diamètres de tubes de cuvelage près de la surface.

Compte tenu des caractéristiques mécaniques exigées, les tubes de cuvelage et ceux de production sont généralement en acier traité thermiquement et ils sont assemblés les uns aux autres par joints filetés, l'épaisseur des joints filetés étant généralement plus grande que celle de la partie courante des tubes et imposant les écarts de diamètres entre colonnes concentriques.

La spécification API 5 CT de l'American Petroleum Institute définit ainsi des joints filetés tubulaires entre deux tubes de grande longueur ("integral-joint tubing", "extreme-line casing") et des assemblages filetés manchonnés comportant deux joints filetés permettant d'assembler deux tubes de grande longueur à l'aide d'un manchon.

De nombreux brevets sont venus perfectionner ces joints et assemblages filetés : par exemple les brevets FR 1.489.013, EP 0 488 912, US 4,494,777 ont visé à réaliser des joints filetés tubulaires dits supérieurs ou "premium" particulièrement étanches grâce à des portées d'étanchéité métal-métal et à des butées entre éléments mâles et femelles.

La demande de brevet WO 99/08034 décrit un joint fileté à filets carrés ayant une lèvre mâle en correspondance avec un logement femelle et présentant des surfaces annulaires d'extrémité mâle et d'épaulement femelle en forme de feuillures en butée et encastrées l'une dans l'autre. La surface périphérique extérieure de la lèvre mâle et la surface périphérique intérieure du logement femelle présentent des parties cylindriques qui interfèrent radialement entre elles pour former un jeu de portées d'étanchéité périphériques en fin de vissage lorsque les feuillures mâle et femelle sont encastrées.

Très récemment, de nouveaux modes d'utilisation des colonnes tubulaires de puits d'hydrocarbures sont envisagés consistant à gonfler de 10 à 20 % le diamètre des tubes de la colonne à l'aide d'un boulet dont le passage est forcé à l'intérieur de la colonne : voir brevets ou demandes de brevet WO 93/25799, WO 98/00626, WO 99/06670, WO 99/35368, WO 00/61915, GB 2344606, GB 2348657.

Une telle expansion peut permettre par exemple de mettre en place une colonne de tubes de cuvelage sans avoir à cimenter l'espace entre la surface périphérique extérieure des tubes et la surface du trou foré dans le sol ou en descendant une colonne de faible encombrement par rapport au trou.

Une telle expansion peut également permettre de colmater les trous d'un tube de cuvelage ou de production percé par la corrosion ou par le frottement des tiges de forage ou de descendre dans le puits des tubes de faible encombrement qui seront expansés au diamètre souhaité une fois en place.

Mais la technique d'expansion peut surtout permettre de forer des puits de diamètre uniforme sur toute leur longueur dont le cuvelage est réalisé par une colonne de tubes tous de même diamètre, les tubes étant introduits à l'état non expansé puis étant expansés in situ au diamètre du puits.

Il est alors possible de diminuer fortement le nombre de tubes nécessaire pour équiper un puits en supprimant les tubes de plus gros diamètre et de plus forte épaisseur, donc le coût du puits. Il peut même être envisagé de forer le puits directement avec la colonne de tubes de cuvelage qui jouerait le rôle de train de tiges de forage.

Cependant les joints filetés tubulaires de l'état de la technique tels que ceux selon le brevet US 4,494,777 ne permettent pas de telles utilisations.

On constate après expansion sur ces joints :
- une absence d'étanchéité qui empêche notamment de réaliser l'expansion en poussant hydrauliquement le boulet dans la colonne ;
- une flèche de l'extrémité mâle vers l'intérieur du joint qui réduit considérablement et de manière inacceptable le diamètre intérieur opérationnel de la colonne en réalisant une saillie intérieure dans l'espace défini par le diamètre intérieur opérationnel ;
- éventuellement la rupture de la lèvre par dépassement de la capacité de déformation de certaines zones particulièrement sollicitées du fait des variations d'épaisseur tout au long des éléments mâles et femelles par rapport à l'épaisseur au corps du tube.

C'est pourquoi les documents cités plus haut concernant les techniques d'expansion ne décrivent pour les modes de réalisation des jonctions entre tubes que des joints soudés (bobines de tubes raboutés préalablement par soudage déroulées depuis la surface) ou des joints frottants (« slips ») alors que les joints filetés sont par ailleurs reconnus pour leurs performances combinant résistance mécanique, étanchéité en toutes conditions de service et possibilité de démontage-remontage plusieurs fois de suite.

A noter que l'on connaît par les documents US 5 924 745 et WO 98/42947 des joints filetés pour assembler des tubes dits EST (expansable slotted tubings) munis de fentes longitudinales permettant l'expansion diamétrale de tubes aux fonds de puits d'hydrocarbures par passage d'un mandrin d'expansion dans ces tubes. De tels joints filetés ne visent aucune caractéristique d'étanchéité, étant donné que les tubes sont munis de fentes traversant la paroi des tubes et permettent à un fluide extérieur au tube (hydrocarbure provenant du gisement) d'entrer dans le tube pour y être remonté en surface.

On a donc cherché à réaliser un joint fileté tubulaire qui soit apte à résister à l'opération d'expansion dans le puits et qui soit étanche aux liquides voire si possible aux gaz après ladite opération d'expansion.

On a aussi cherché à ce que le joint fileté tubulaire soit simple et économique à produire.

On a en outre cherché à ce que le joint fileté possède de bonnes caractéristiques métallurgiques en service donc après expansion, notamment à ce qu'il présente dans cet état une limite d'élasticité suffisante, à ce qu'il soit exempt de fragilité et à ce qu'il présente de bonnes caractéristiques à la fissuration sous contrainte par H2S.

Selon la présente invention, le joint fileté tubulaire apte à être expansé comprend un élément fileté mâle avec un filetage mâle extérieur en extrémité d'un premier tube et un élément fileté femelle avec un filetage femelle intérieur en extrémité d'un second tube.

L'élément fileté mâle comprend au-delà du filetage mâle en allant vers l'extrémité libre de l'élément une lèvre mâle non filetée ayant une surface périphérique extérieure et se termine par une surface d'extrémité mâle de forme annulaire et d'orientation partiellement transversale.

L'élément fileté femelle comprend un filetage femelle conjugué du filetage mâle et un logement femelle non fileté pour la lèvre mâle. Ce logement comporte une surface périphérique intérieure et une surface d'épaulement femelle de forme annulaire et d'orientation partiellement transversale reliée à la surface périphérique intérieure du second tube.

Le filetage mâle est vissé dans le filetage femelle jusqu'à une position où la surface d'extrémité mâle est engagée contre la surface d'épaulement femelle.

Selon une caractéristique générale de l'invention rendant le joint fileté tubulaire apte à être étanche et à présenter une section de passage intérieur maximale après avoir subi une expansion diamétrale dans le domaine des déformations plastiques, les surfaces d'extrémité mâle et d'épaulement femelle possèdent des formes complémentaires l'une de l'autre réalisant avant expansion l'encastrement de la surface d'extrémité mâle par celle d'épaulement femelle.

De plus, la surface périphérique extérieure de la lèvre mâle est disposée à faible jeu de la surface périphérique intérieure du logement femelle.

L'encastrement de la surface d'extrémité mâle dans celle d'épaulement femelle impose un moment de flexion à l'extrémité libre de la lèvre mâle lorsque la zone de pleine épaisseur du second tube situé au-delà de l'épaulement femelle est inclinée lors de l'expansion par rapport à l'axe de l'assemblage

L'encastrement permet de constituer sur le joint fileté à l'état expansé diamétralement une zone d'étanchéité annulaire par pression de contact métal/métal entre une partie de la surface périphérique extérieure de la lèvre mâle et une partie correspondante de la surface périphérique intérieure du logement femelle.

L'encastrement empêche aussi toute tendance naturelle de ladite extrémité libre à plonger vers l'intérieur de la colonne lors de l'expansion et y faire saillie intérieure en l'absence d'un tel encastrement.

Ce comportement lors de l'expansion constaté par les inventeurs de manière inattendue sera explicité dans la partie détaillée de la description.

Par faible jeu entre surface périphérique extérieure de lèvre mâle et surface périphérique intérieure de logement femelle, on entend des jeux mesurés perpendiculairement à ces surfaces inférieurs ou égaux à 0,3 mm.

L'absence d'interférence radiale sensible entre surface périphérique extérieure de lèvre mâle et surface intérieure de logement femelle due à ce jeu fait que ces surfaces périphériques ne jouent pas de rôle de portées d'étanchéité sur le joint non expansé. Les inventeurs ont en effet constaté qu'une interférence radiale de ces surfaces avant expansion du joint fileté n'était pas nécessaire pour obtenir un joint étanche après expansion.

Ils ont par contre constaté qu'un espace trop important entre ces surfaces ne permet pas de réaliser leur frettage après expansion, frettage nécessaire pour obtenir un joint fileté étanche.

On connaît dans l'état de la technique le brevet US 4,611,838 qui décrit un joint fileté ayant une lèvre mâle en correspondance avec un logement femelle et présentant une surface annulaire d'extrémité mâle comportant une dent annulaire et une surface annulaire d'épaulement femelle comportant une rainure annulaire, en butée l'une contre l'autre, la lèvre mâle possédant une surface périphérique extérieure torique et le logement femelle possédant une surface périphérique intérieure conique.

Ces surfaces périphériques interfèrent radialement en fin de vissage pour constituer des portées d'étanchéité, le brevet US 4,611,838 visant à maximaliser l'interférence radiale de la surface périphérique torique extérieure de la lèvre mâle avec la surface périphérique conique intérieure du logement femelle en fin de vissage (et par là même l'étanchéité du joint fileté) grâce à la forme de ces surfaces périphériques et à l'effet de support de la surface inférieure de la rainure pour la surface inférieure de la dent.

Mais la surface d'extrémité mâle selon ce brevet n'est pas totalement encastrée dans celle de l'épaulement femelle du joint fileté et ne permet donc pas de transmettre un moment de flexion à l'extrémité libre de la lèvre mâle du fait de l'espace libre entre la paroi supérieure de la languette à l'extrémité libre de celle-ci et la paroi supérieure de la rainure au fond de celle-ci.

Rien ne suggère dans ce document les effets sur les portées d'étanchéité d'une expansion diamétrale avec déformation plastique ni même que ce joint fileté puisse subir une telle expansion avec succès. L'expérience acquise par les inventeurs montre que l'étanchéité d'un joint fileté selon le document US 4,611,838 ne peut être assurée après une telle expansion.

Le brevet US 3,870,351 présente une configuration de lèvre et d'extrémité mâles et de logement femelle voisine de la configuration du brevet US 4,611,838, la surface d'extrémité libre mâle étant bombée convexe et portant contre une surface d'épaulement femelle bombée concave de manière à réaliser deux jeux de portées d'étanchéité métal-métal, l'un au niveau des surfaces bombées, l'autre jeu étant disposé sur la surface périphérique extérieure de lèvre mâle et sur la surface périphérique intérieure de logement femelle. Une telle configuration permet d'augmenter l'interférence radiale entre les portées d'étanchéité périphériques.

Dans la demande de brevet WO 99/08034 mentionnée ci-avant dans le texte, la surface périphérique extérieure de la lèvre mâle et la surface périphérique intérieure du logement femelle présentent des parties cylindriques interférant radialement entre elles en fin de vissage avec les inconvénients exposés ci-avant contrairement au joint fileté selon la présente invention.

Le brevet US 6047997 décrit enfin une structure de tiges de forage pour conduits souterrains pour lesquels il n'y a pas d'exigence particulière d'étanchéité. La surface d'extrémité mâle selon ce brevet est encastrée dans une surface d'épaulement femelle mais les figures font apparaître un espace important entre la surface périphérique extérieure de la lèvre mâle et la surface périphérique intérieure du logement femelle ne permettant pas de réaliser une étanchéité entre ces surfaces après une expansion diamétrale du joint fileté.

Aucun de ces quatre documents cités ne présente une structure identique à celle revendiquée pour la présente invention. Aucun n'envisage non plus l'expansion diamétrale des joints filetés qu'ils décrivent ni la possibilité d'obtenir des joints filetés étanches après une telle expansion.

Préférentiellement, selon la présente invention, la surface d'extrémité mâle possède pour son encastrement dans celle d'épaulement femelle la forme d'une feuillure constituée par une surface transversale du côté dirigé vers l'intérieur du joint fileté et du côté opposé de la feuillure une languette annulaire se projetant axialement. La surface d'épaulement femelle possède pour coopérer avec la surface d'extrémité mâle la forme d'une feuillure constituée par une surface transversale du côté dirigé vers l'intérieur du joint fileté et une rainure annulaire du côté opposé, la surface transversale de feuillure mâle coopérant avec celle de feuillure femelle et la languette annulaire coopérant avec la rainure annulaire.

Très préférentiellement pour la présente invention, les parois annulaires de la rainure frettent celles de la languette.

Avantageusement, en position assemblée, les surfaces transversales de feuillure du côté intérieur de celle-ci sont en butée l'une contre l'autre. Alternativement elles peuvent simplement être en quasi-contact.

Préférentiellement aussi l'épaisseur radiale de la languette de la feuillure mâle est sensiblement égale à celle de la surface transversale de la même feuillure.

Préférentiellement aussi la hauteur mesurée axialement de la languette de la feuillure mâle est sensiblement égale à son épaisseur radiale.

Préférentiellement aussi la surface périphérique extérieure de lèvre mâle et la surface périphérique intérieure de logement femelle sont des surfaces cylindriques : l'usinage de ces surfaces non interférentes est donc particulièrement aisé et peu coûteux.

Avantageusement, l'épaisseur de la lèvre mâle est comprise entre 1/3 et 2/3 de l'épaisseur du premier tube.

Cette fourchette d'épaisseur de lèvre mâle permet d'assurer une section critique en pied de filetage suffisante pour une résistance adéquate à la traction axiale du joint fileté.

Avantageusement aussi, le rapport entre la longueur et l'épaisseur de la lèvre mâle est compris entre 1 et 4, la longueur de la lèvre mâle étant mesurée jusqu'à l'aplomb de la surface transversale de la feuillure mâle.

La valeur minimale de ce rapport permet la déformation plastique de la lèvre mâle et du logement femelle lors de l'expansion ; ces déformations plastiques génèrent des surfaces portant l'une sur l'autre avec une pression de contact élevée et donc l'étanchéité du joint fileté après expansion.

La valeur maximale de ce rapport permet d'éviter un flambement non maîtrisé de la lèvre mâle, flambement qui se traduirait par la saillie de ladite lèvre à l'intérieur de la colonne de tubes.

Très avantageusement, l'élément fileté mâle présente une gorge en extrémité de filetage entre filetage et lèvre mâle. Cette gorge facilite la déformation plastique de la lèvre mâle durant l'expansion du joint fileté.

De préférence, la gorge a une profondeur sensiblement égale à la hauteur du filet mâle de sorte que le fond des filets mâles aboutit en fond de gorge.

De préférence également, la gorge a une longueur comprise entre 2 et 8 fois sa profondeur. Un rapport longueur/profondeur inférieur à 2 ne permet pas à la gorge de faciliter la déformation plastique de la lèvre. Un rapport longueur/profondeur supérieur à 8 se traduit par un risque important de flambement de la matière vers l'intérieur de la colonne lors de l'expansion.

L'invention peut avantageusement s'appliquer tant à des joints filetés à filetages coniques qu'à des joints filetés à filetages cylindriques à simples et/ou multiples étages.

Avantageusement aussi, le premier tube et le second tube ont le même diamètre intérieur tant au niveau des éléments filetés qu'au niveau du corps des tubes, ce qui facilite les opérations d'expansion.

Avantageusement aussi, il en est de même pour les diamètres extérieurs.

Très avantageusement, le joint fileté est de type intégral, c'est-à-dire que chaque tube est un tube de grande longueur qui comporte un élément fileté mâle à une extrémité et un élément fileté femelle à l'autre extrémité, l'élément mâle d'un tube étant vissé dans l'élément femelle d'un autre tube et ainsi de suite pour constituer une colonne.

La présente invention vise ainsi à protéger un joint fileté étanche résultant de l'expansion diamétrale dans le domaine des déformations plastiques d'un joint fileté tel qu'exposé ci-dessus.

Préférentiellement, l'expansion diamétrale mise en oeuvre est supérieure à 10 %.

La présente invention vise aussi à protéger les joints filetés exposés ci-dessus à l'état non expansé ou expansé dont les éléments filetés sont réalisés en acier comprenant des éléments avides d'azote rendant l'acier non sensible au vieillissement par écrouissage. L'acier est en outre traité thermiquement pour maximaliser ses caractéristiques d'allongement réparti. Il en résulte de bonnes caractéristiques d'emploi.

La présente invention vise encore à protéger un procédé de réalisation d'un joint fileté tubulaire étanche.

Selon ce procédé, on part d'un joint fileté tubulaire selon l'invention exposée ci-avant dit « joint fileté tubulaire initial » pour lequel aucune caractéristique d'étanchéité n'est exigée et on fait subir à ce joint fileté initial une expansion diamétrale dans le domaine des déformations plastiques à l'aide d'un boulet d'expansion de diamètre supérieur au diamètre intérieur des tubes du joint fileté initial, le boulet d'expansion étant déplacé axialement dans le joint fileté initial. La lèvre mâle et le logement femelle sont dimensionnés pour que la lèvre mâle et le logement femelle subissent d'abord ensemble lors du passage du boulet une déformation plastique de flexion alors que seul le logement femelle subit ensuite une déformation plastique en sens inverse de redressement, ce qui vient fretter en final la lèvre mâle par le logement femelle.

Préférentiellement, la flexion de la lèvre mâle est délimitée par la présence d'une gorge à l'extrémité de la lèvre mâle du côté du filetage mâle.

Préférentiellement encore, le joint fileté tubulaire mis en oeuvre est du type intégral et le boulet d'expansion est déplacé de l'élément fileté mâle vers l'élément fileté femelle.

Les figures ci-après illustrent de manière non limitative des modes de réalisation de l'invention.
La figure 1 représente un joint fileté selon l'invention avant expansion diamétrale.
La figure 2 représente l'élément mâle du joint fileté de la figure 1.
La figure 3 représente l'élément femelle du joint fileté de la figure 1.
Les figures 4 à 7 représentent le joint fileté selon l'invention à diverses étapes du processus d'expansion.

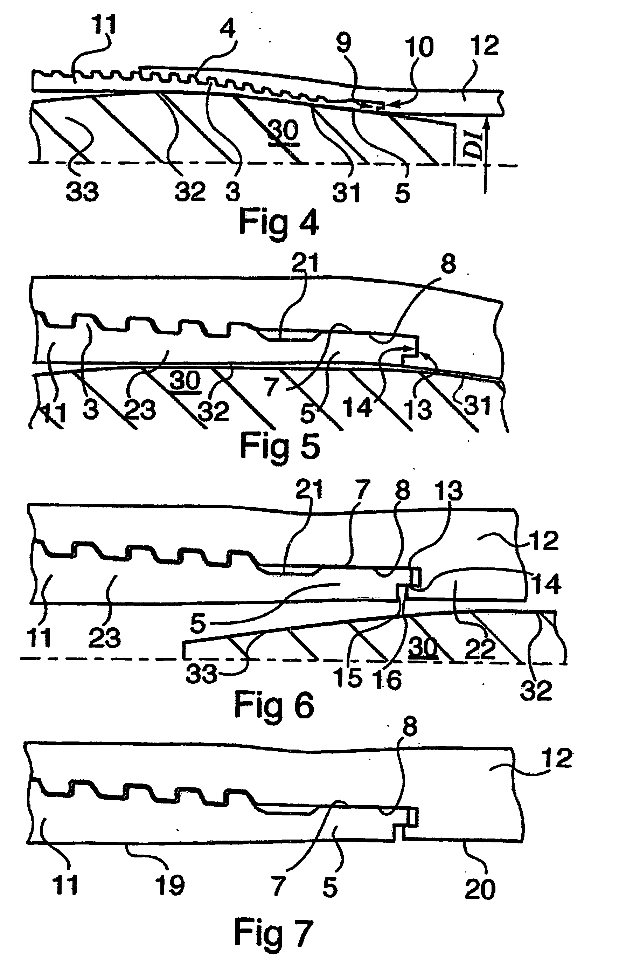

La figure 4 représente la phase d'expansion du joint fileté.
La figure 5 représente la phase de flexion.
La figure 6 représente la phase de redressement.
La figure 7 représente l'état final du joint fileté ayant subi le processus d'expansion.

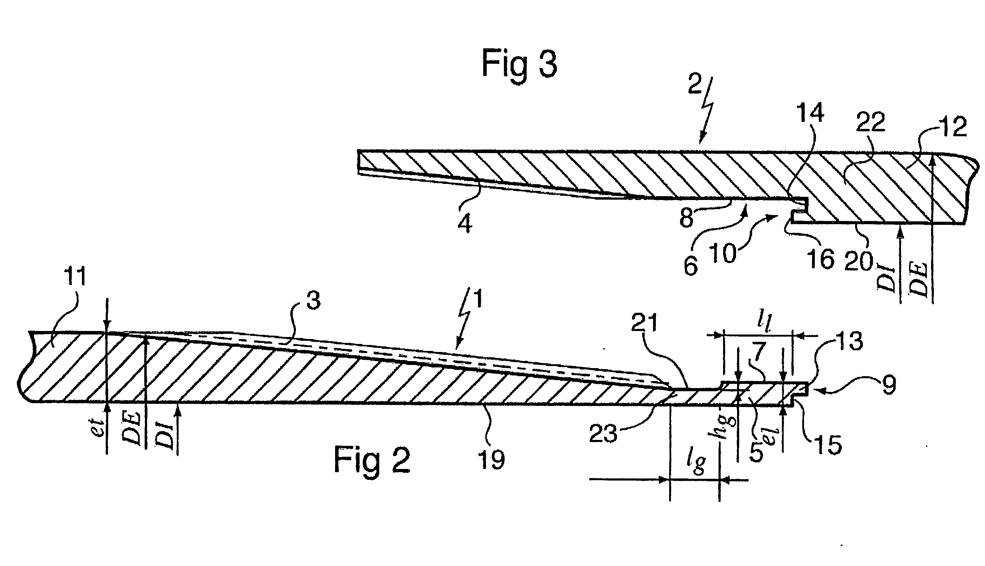

La figure 8 représente un détail de la figure 2 au niveau de l'extrémité libre mâle.
La figure 9 représente un détail de la figure 3 au niveau du logement femelle.

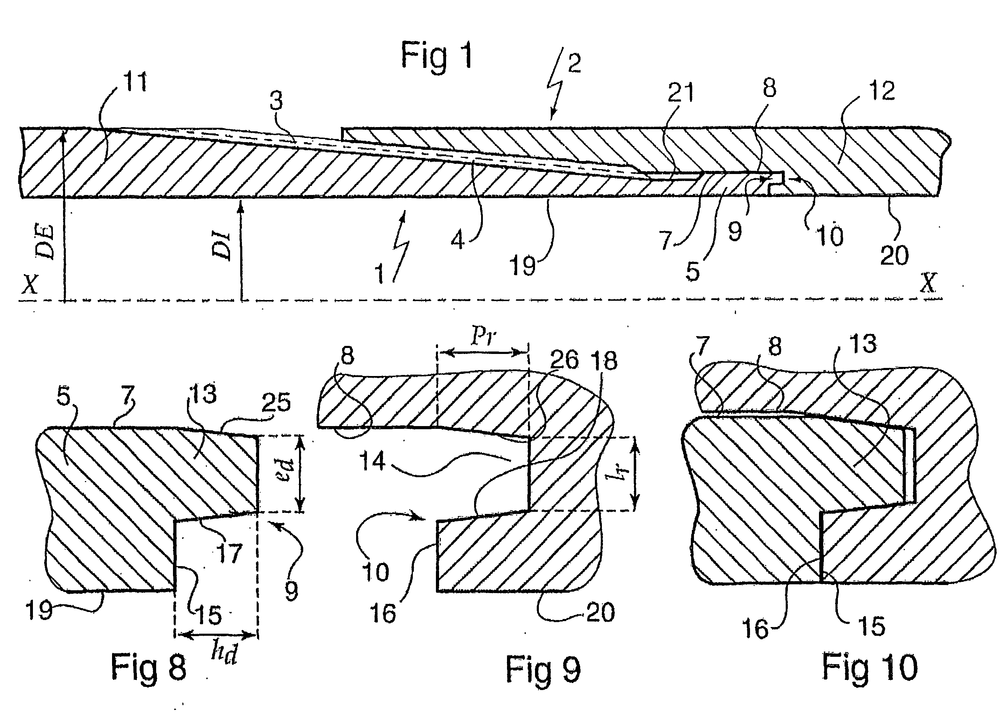

La figure 10 représente un détail de la figure 1.

La figure 1 représente un joint fileté selon l'invention comprenant un élément fileté mâle 1 disposé en extrémité d'un premier tube 11, élément mâle qui est vissé en butée dans un élément fileté femelle 2 disposé en extrémité d'un second tube 12. Le diamètre intérieur de l'élément fileté mâle est égal au diamètre intérieur DI des tubes 11, 12. Le diamètre extérieur de l'élément fileté femelle est en outre dans le cas présent égal au diamètre extérieur DE des tubes 11, 12 mais il peut en être autrement.

Le joint fileté est représenté sur la figure 1 à l'état simplement vissé en butée avant toute opération d'expansion diamétrale.

Le second tube 12 tel que représenté est un tube de grande longueur mais pourrait très bien être, de manière non représentée, un manchon muni de l'élément femelle 2 et d'un second élément femelle symétrique de ce dernier vissé à un élément mâle situé en extrémité d'un autre tube de grande longueur.

L'élément mâle 1 est représenté seul à la figure 2.

Il comprend un filetage mâle 3, conique à filets trapézoïdaux, et se prolonge vers son extrémité libre par une partie non filetée constituée par une gorge 21 et par une lèvre 5 et se termine par une surface annulaire d'extrémité mâle 9.

La gorge 21 possède une forme en U peu profond.

Elle démarre immédiatement au-delà du filetage et sa profondeur hg est égale à la hauteur des filets du filetage 3. De la sorte le fond de la gorge arrive au pied du premier filet du filetage.

La largeur de la gorge lg est sensiblement égale à 4 fois sa profondeur hg.

La lèvre 5 présente :
a) une surface périphérique extérieure 7 de forme cylindrique,
b) une surface périphérique intérieure 19 qui correspond à la zone d'extrémité de la surface périphérique intérieure cylindrique du premier tube 11,

La lèvre 5 possède donc une épaisseur e₁ uniforme sensiblement égale à la moitié de l'épaisseur eₜ du tube 11. Elle possède une longueur Iₗ mesurée depuis l'extrémité de la gorge jusqu'à l'aplomb de la surface 15 (définie plus bas) sensiblement égale à 3 fois l'épaisseur de lèvre eₗ.

La surface d'extrémité mâle 9 forme une feuillure représentée en détail à la figure 8. Cette feuillure est constituée d'une surface transversale annulaire mâle 15 et d'une languette 13 annulaire se projetant axialement. La surface transversale mâle 15 est située du côté de la feuillure dirigé vers l'intérieur du joint fileté.

Les parois 17, 25 de la languette 13 ne sont pas rigoureusement parallèles mais convergent légèrement vers l'extrémité libre de la languette ; ces parois sont donc portées par des surfaces légèrement coniques coaxiales avec l'axe de l'assemblage et dont le demi-angle au sommet vaut 1 à 2 degrés.

L'épaisseur radiale (ed) de la languette 13 est sensiblement identique à celle de la surface transversale 15 tandis que la hauteur de la languette (hd) (ou projection axiale de celle-ci) est sensiblement égale à l'épaisseur radiale (ed) de cette même languette.

L'élément femelle 2 est représenté seul à la figure 3.

Il comprend un filetage femelle 4 à filets trapézoïdaux conjugué du filetage mâle 3 et une partie non filetée 6 située du côté opposé à l'extrémité libre de l'élément femelle par rapport au filetage femelle 4. Cette partie non filetée 6 forme un logement pour correspondre et coopérer avec la lèvre 5 de l'élément mâle 1.

Le logement femelle 6 présente une surface périphérique intérieure de logement 8 de forme cylindrique reliée d'un côté au filetage femelle 4 et de l'autre côté via un épaulement femelle 10 à la surface périphérique intérieure cylindrique 20 du second tube 12.

Le diamètre de la surface périphérique du logement 8 est très légèrement supérieur au diamètre de la surface périphérique extérieure 7 de la lèvre mâle 5 de sorte que les surfaces 7 et 8 peuvent coulisser l'une dans l'autre à faible jeu lors du vissage de l'élément mâle dans l'élément femelle, par exemple avec un jeu de 0,2 mm.

L'épaulement femelle (voir figure 9) présente une surface annulaire d'épaulement 10 qui est disposée de manière sensiblement correspondante et possède une forme sensiblement correspondante à celle d'extrémité mâle 9. La surface 10 forme une feuillure constituée d'une surface annulaire transversale femelle 16 et d'une rainure annulaire 14.

La surface transversale femelle 16 est située du côté de la feuillure dirigé vers l'intérieur du joint fileté.

La rainure 14 possède une profondeur axiale (Pr) légèrement supérieure à la hauteur de la languette 13 de sorte que, en position assemblée, les surfaces transversales annulaires mâles et femelles 15, 16 sont en butée l'une contre l'autre tandis que l'extrémité de la languette 13 n'est pas en appui contre le fond de la rainure 14 (voir figure 10).

Les parois 18, 26 de la rainure 14 ne sont pas rigoureusement parallèles mais convergent légèrement vers le fond de la rainure ; ces parois sont donc portées par des surfaces légèrement coniques coaxiales avec l'axe de l'assemblage et dont le demi-angle au sommet vaut 1 à 2 degrés comme le demi-angle au sommet des parois 17, 25 de languette 13.

La largeur radiale (Ir) de la rainure n'est donc pas rigoureusement constante sur toute la profondeur de la rainure ; elle est adaptée pour que les parois périphériques de la languette 13 arrivent en contact avec les parois correspondantes de la rainure 14 un peu avant la position d'assemblage.

Ceci permet d'assurer à la fois le faible jeu requis entre les surfaces périphériques cylindriques de lèvre 7 et de logement 8 et le frettage de la languette 13 par la rainure 14. Ce frettage et la mise en butée des surfaces transversales 15, 16 constituent un mode préférentiel d'assurer l'encastrement de la surface d'extrémité mâle 9 par celle d'épaulement femelle 10.

Les figures 4 à 7 explicitent les phénomènes de déformation qui se produisent lorsque l'on réalise au moyen d'un boulet une expansion diamétrale de l'ordre de 15 % sur des tubes assemblés par les joints filetés qui viennent d'être décrits et qui permettent d'obtenir en final un joint expansé étanche.

Une telle déformation effectuée sur des matériaux métalliques conduit à des déformations plastiques du métal.

On passe ainsi par exemple d'un diamètre extérieur de 139,7 mm (5" 1/2) sur le deuxième tube 12 en amont de l'expansion et par conséquent dans la partie non encore déformée à un diamètre extérieur de 157,5 mm (6,2") sur le premier tube 11 expansé (à l'aplomb ou en aval du cône de sortie 33 du boulet). Il faut de ce fait utiliser pour les tubes un métal qui accepte de telles déformations plastiques.

Les déformations plastiques générées augmentent la limite d'élasticité des produits : un tube possédant initialement une limite d'élasticité de 310 MPa (45 KSI) voit ainsi celle-ci augmenter à 380 MPa (55 KSI) après déformation.

L'expansion diamétrale est réalisée de manière connue à l'aide d'un boulet 30 (figure 4) de diamètre maximal adéquat dont on force le passage dans les tubes soit en le tirant à l'aide de tiges de forage soit en le poussant par exemple par une pression hydraulique.

Le boulet a par exemple une forme biconique avec un cône d'entrée 31 sur lequel se fait l'expansion, une partie cylindrique médiane 32 et une partie conique de sortie 33. Toutes les surfaces des parties de boulet sont raccordées entre elles par des rayons de raccordement adaptés.

La demande de brevet WO 93/25800 divulgue notamment des angles de cônes d'entrée particulièrement adaptés à l'expansion diamétrale de tubes dits EST pour l'exploitation de puits d'hydrocarbures.

Les tubes 11, 12 ayant une section constante leurs extrémités ne posent pas de problème particulier lors du passage du boulet pourvu que la capacité de déformation du métal dont ils sont faits soit suffisante.

Les problèmes à résoudre viennent du fait que les éléments filetés en extrémité des tubes ont des épaisseurs plus faibles que celles au corps des tubes et tendent à se déformer de manière différente entre les parties mâles et les parties femelles correspondantes.

Ces déformations différentes, si elles sont maîtrisées en utilisant le joint fileté selon l'invention, permettent de réaliser un joint fileté étanche après expansion diamétrale ne présentant pas de relief local rédhibitoire à l'intérieur de la surface périphérique intérieure des tubes.

Le processus d'expansion du joint fileté peut être décomposé en 4 phases qui font l'objet des figures 4 à 7.

Bien que l'opération d'expansion puisse tout à fait être effectuée dans le sens contraire et conduire à des résultats adéquats, on a représenté le mode préféré de déformation dans lequel le boulet se déplace de l'élément mâle 1 du premier tube 11 vers l'élément femelle 2 du second tube 12.

### a) Phase d'expansion sur le cône du boulet

La figure 4 montre le joint fileté au cours de cette phase.

L'expansion est réalisée par le cône d'entrée 31 du boulet 30 et la figure 4 montre les filetages mâles 3 et femelles 4 en cours d'expansion diamétrale.

Sur la figure 4, le cône d'entrée 31 du boulet 30 amorce la déformation de la lèvre mâle et de la zone de logement correspondante femelle en les pliant pour les incliner par rapport à l'axe de l'assemblage.

Au cours de cette phase d'expansion, les efforts de réaction au passage du boulet 30 sont progressivement transférés du premier tube 11 vers le deuxième tube 12.

Du fait de ces efforts de réaction, la lèvre mâle 5 est comprimée axialement au cours de cette phase d'expansion par la surface annulaire d'épaulement femelle 10.

La fin de la phase d'expansion correspond à l'arrivée de l'extrémité libre de l'élément mâle à la fin du cône d'entrée 31 du boulet.

### b) Phase de flexion

Au cours de cette phase, la lèvre mâle est située au niveau de la partie centrale 32 du boulet : voir figure 5.

### i) lèvre mâle

La lèvre mâle 5 est soumise à chacune de ses deux extrémités à des moments de flexion de sens opposés.

La surface d'extrémité mâle 9 est en effet encastrée dans la surface d'épaulement femelle 10 du fait des feuillures avec appuis 15, 16 et système frettant languette 13/rainure 14.

L'encastrement des feuillures oblige la zone d'extrémité libre de la lèvre mâle 5 à suivre l'inclinaison de la zone 22 de pleine épaisseur de l'élément femelle au-delà de l'épaulement, zone 22 qui est encore en cours d'expansion sur le cône d'entrée 31 du boulet et crée donc un moment de flexion à ce niveau.

L'autre extrémité de la lèvre, du côté filetage mâle 3, n'est plus supportée et impose au contraire à la lèvre un moment de flexion de plus opposé par rapport à celui en extrémité libre de lèvre.

Les moments de flexion de signe opposé aux 2 extrémités de la lèvre mâle entraînent la courbure en banane de la lèvre mâle 5 comme sur la figure 5, la surface périphérique extérieure 7 de la lèvre 5 prenant une forme bombée convexe.

L'état de compression axiale de la lèvre mâle 5 en fin de phase d'expansion facilite sa courbure sous l'effet des mouvements de flexion.

La gorge 21 située entre la lèvre mâle 5 et le filetage mâle 3 joue le rôle d'une rotule plastique qui accentue la courbure de la lèvre mâle en limitant la largeur sur laquelle cette courbure peut s'effectuer.

Il faut toutefois veiller dans ce cas à ce que les contraintes de compression axiale au niveau de la lèvre mâle n'induisent pas le flambement du métal 23 sous la gorge, ce qui se traduirait par une saillie du métal sous la gorge par rapport à la surface périphérique intérieure 19.

### ii) logement femelle

Le même phénomène de flexion se produit sur le logement femelle.

La zone 22 de pleine épaisseur relativement rigide par rapport aux zones de lèvre relativement minces subit à son passage au niveau de la partie médiane une expansion additionnelle de sorte que le diamètre intérieur de la zone 22 devient supérieur à celui de la zone médiane 32 du boulet. Le phénomène d'expansion additionnelle est décrit dans le document WO 93/25800.

### c) Phase de redressement

Cette phase illustrée par la figure 6 correspond au passage de la zone 22 de pleine épaisseur femelle sur la partie médiane 32 du boulet 30.

### i) logement femelle

La flexion générée dans la phase précédente tend à être ramenée à zéro sous l'effet de la tension et des contraintes circonférentielles, ce qui génère un état de contraintes axiales de flexion inverse par rapport à la courbure, produisant ainsi le redressement.

Le moment de flexion engendré par ces contraintes est proportionnel à l'épaisseur de matière en amont du redressement. Au moment d'arriver sur le tube 12 en pleine épaisseur (zone 22), le moment de flexion n'est alors pas suffisant pour redresser la zone périphérique intérieure du logement femelle qui tend à plonger alors vers l'axe du produit. Ce comportement se manifeste par une diminution locale de diamètre extérieur du tube 12.

### ii) lèvre mâle

Au fur et à mesure du redressement de la partie femelle, la différence d'encombrement axial qui était générée par la flexion diminue. La lèvre mâle 5 perd donc progressivement son état de compression. Cela se poursuit avec la séparation des surfaces 15, 16 initialement en butée. Ce phénomène est renforcé par "le plongeon" de la surface périphérique intérieure 8 du logement femelle qui produit un effet d'ouverture des butées 15, 16.

La déformation en banane imposée dans la phase précédente est conservée.

### d) Etat final

La figure 7 montre l'état final du joint fileté après le passage du boulet.

L'état de contraintes circonférentielles généré par l'expansion conduit à un frettage de la surface périphérique extérieure 7 de la lèvre mâle par celle intérieure 8 du logement femelle. On peut alors parler d'auto-frettage des surfaces 7, 8 du joint fileté à l'état expansé, ce qui permet d'assurer l'étanchéité. La lèvre mâle 5 ne plonge pas vers l'axe, car le déportement imposé par l'encastrement des feuillures 9, 10 a généré suffisamment de déformations plastiques.

Le retour élastique des éléments du joint fileté après passage du boulet est négligeable devant les déformations plastiques mises en jeu.

Le frettage radial induit une pression de contact de plusieurs dizaines de MPa, suffisante pour assurer une étanchéité aux pressions intérieures ou extérieures au joint fileté.

Une étanchéité est par ailleurs nécessaire lorsque l'expansion est réalisée en poussant hydrauliquement le boulet 30 sous une pression de 10 à 30 MPa, toute fuite au niveau des joints déjà expansés empêchant la pénétration du boulet plus avant dans la colonne et bloquant par conséquent le processus d'expansion.

On notera qu'à l'état final, il peut très bien advenir que la languette 13 ne repose plus dans la rainure 14 et notamment plus sur la paroi intérieure 18 de rainure.

Les caractéristiques objets de la revendication 1 et des revendications qui en dépendent permettent d'obtenir les résultats recherchés.

Une surface d'extrémité mâle 9 ne permettant pas un encastrement avec celle d'épaulement femelle 10 entraîne une plongée de cette extrémité lors de la phase de redressement qui voit la séparation des surfaces transversales 15 et 16 initialement en butée et il s'ensuit une saillie inacceptable de l'extrémité inférieure de la lèvre mâle à l'intérieur de la colonne. La colonne ne permet alors plus de descendre des appareillages ou des outils d'un encombrement donné.

Le jeu trop important entre surface périphérique 7 de la lèvre mâle 5 et surface périphérique 8 du logement femelle sur le joint fileté avant expansion ne permettrait pas le frettage de ces surfaces en fin d'opération d'expansion.

Une interférence radiale entre ces surfaces à l'état initial avant expansion est susceptible de gêner les déformations différentielles (courbure, redressement) entre ces surfaces lors des opérations d'expansion, déformations différentielles permettant de réaliser le frettage de ces surfaces en fin d'opération d'expansion.

La forme préférée en feuillure annulaire avec surfaces transversales 15, 16 et système languette 13/ rainure 14 permet d'empêcher la plongée de l'extrémité libre mâle, lors de l'expansion mais n'est qu'un exemple de mode de réalisation possible pour les surfaces encastrées 9, 10, d'autres modes étant possibles donnant le même résultat.

Une lèvre mâle 5 trop mince, d'épaisseur eₗ inférieure au tiers de l'épaisseur eₗ des tubes 11, 12 ne permet pas de réaliser une butée efficace au niveau des surfaces transversales 15, 16.

Si l'épaisseur e, de la lèvre mâle 5 est au contraire supérieure aux 2/3 de l'épaisseur eₜ des tubes 11, 12, l'épaisseur du tube 12 au niveau de la zone de logement femelle entraîne une section critique de filetage femelle 4 trop faible et par conséquent une résistance insuffisante à la traction des filetages.

Le rapport longueur/ épaisseur de lèvre mâle 5 régit le comportement en compression et en flexion de la lèvre 5.

Une lèvre mâle 5 de longueur Iₗ inférieure à son épaisseur eₗ ne permet pas la flexion suffisante de la surface périphérique 7 de la lèvre mâle 5 et/ou le redressement de la surface périphérique 8 du logement femelle.

Une lèvre mâle 5 de longueur Iₗ supérieure à 4 fois son épaisseur eₗ peut entraîner un flambement de la lèvre mâle et une saillie intérieure de celle-ci du côté filetage.

Cet effet est accentué par la présence d'une gorge 21 entre filetage mâle 3 et lèvre mâle 5.

C'est pourquoi la gorge a préférentiellement une profondeur limitée à une hauteur de filet et une longueur limitée par rapport à sa profondeur.

### Exemple de réalisation

- Tubes de diamètre extérieur DE 139,7 mm et d'épaisseur nominale eₜ 7,72 mm (5"^{½} × 17,00 lb/ft) en acier au carbone traité pour une limite d'élasticité minimale de 290 MPa (42 KSI) :
   La composition chimique de l'acier et son traitement thermique sont adaptés pour obtenir des caractéristiques de ductilité les plus élevées possibles et plus particulièrement des caractéristiques élevées d'allongement réparti avant striction A_{R} lors de l'essai de traction (A_{R} supérieur ou égal à 15 % par exemple).
   On choisira par exemple un acier à teneur en carbone suffisamment basse, voisine de 0,14 % (en poids), à teneur en manganèse relativement élevée, de l'ordre de 1 % et comportant une addition d'aluminium apte à fixer l'azote résiduel de l'acier.
   Une teneur en Al de 0,035 % pour une teneur en azote de 0,010% est tout à fait convenable dans la mesure où l'acier est traité thermiquement par recuit ou par trempe suivie de revenu pour que l'addition d'Al soit effectivement à même de fixer l'azote. D'autres éléments chimiques connus pour fixer l'azote peuvent également être utilisés conjointement ou à la place de l'aluminium.
   Une telle composition chimique qui vise à éliminer les teneurs en atomes interstitiels libres tels que ceux d'azote rend en outre l'acier insensible au phénomène néfaste de vieillissement après écrouissage qui détériore aussi les caractéristiques de ductilité.
   L'acier peut être à l'état recuit (recuit de normalisation ou recuit de détente après travail à froid par exemple) ou dans un état structurellement équivalent.
- Joints filetés intégraux selon l'invention :
   - filetages 3,4 coniques (conicité = 12,5 % sur le diamètre) à filets trapézoïdaux de hauteur radiale 1 mm et de pas axial 4 mm
   - lèvre mâle 5 de forme cylindrique
   - épaisseur eₗ de lèvre mâle 3,2 mm (41 % de l'épaisseur du tube)
   - longueur Iₗ de lèvre mâle = 11,5 mm
   - gorge 21 de profondeur hg 1 mm et de longueur Ig 4 mm entre extrémité de filetage mâle 3 et lèvre mâle 5
   - surface d'extrémité mâle 9 avec une languette 13 de hauteur axiale 1,8 mm et d'épaisseur radiale 1,8 mm
   - résistance à la traction du joint fileté ≥ 50 % de la résistance à la traction de chacun des corps de tubes 11, 12.
- Résultats après expansion de la colonne de tubes :
   - diamètre extérieur des tubes 11, 12 = 157,5 mm (6,2")
   - épaisseur des tubes : 7,2 mm
   - limite d'élasticité des tubes ≥ 415 MPa (60 KSI)
   - dureté ≤ 22 HRc (valeur maximale spécifications NACE MR 01 75)
   - passages satisfaisant aux tests suivants réalisés à l'état expansé et à l'état expansé + vieilli
      → essai d'éclatement sous pression intérieure
      → essai d'effondrement sous pression extérieure ("collapse")
      → essai de tenue aux chocs Charpy V
      → essai SSC de résistance à la fissuration par H₂S (SSC : "Sulfide stress cracking") selon spécification NACE TM 01-77
         Nota : NACE = National association of Corrosion Engineers (USA).

La description des modes de réalisations exposés n'exclut pas que la protection accordée à la présente invention puisse s'appliquer à des modes de réalisations non exposés en détail mais couverts par les présentes revendications.

## Revendications

1. Joint fileté tubulaire pour puits d'hydrocarbures comprenant un élément fileté mâle (1) en extrémité d'un premier tube (11) et un élément fileté femelle (2) en extrémité d'un second tube (12), l'élément fileté mâle comprenant en allant vers l'extrémité libre dudit élément mâle un filetage mâle (3) et une lèvre mâle (5) qui comporte une surface périphérique extérieure (7) et se terminant transversalement par rapport à l'axe du joint fileté par une surface d'extrémité mâle (9) de forme annulaire, l'élément fileté femelle (2) comprenant un filetage femelle (4) correspondant au filetage mâle (3) et une partie non filetée (6) de logement femelle pour la lèvre mâle, ce logement femelle comprenant une surface périphérique intérieure (8) et une surface d'épaulement femelle (10), annulaire, d'orientation en partie transversale et de forme complémentaire à celle de la surface d'extrémité mâle (9), le filetage mâle (3) étant vissé dans le filetage femelle (4) jusqu'à une position où la surface annulaire d'extrémité mâle (9) est engagée contre la surface d'épaulement femelle (10) en réalisant un encastrement de ces surfaces l'une dans l'autre, **caractérisé en ce que** ledit joint fileté étant destiné à subir ultérieurement mais avant mise en service une expansion diamétrale dans le domaine des déformations plastiques, la surface périphérique extérieure (7) de lèvre mâle (5) est disposée à faible jeu de la surface périphérique intérieure (8) du logement femelle (6) sans interférer radialement avec celle-ci; de manière à ce que ladite surface périphérique intérieure (8) de logement femelle et ladite surface périphérique extérieure (7) de lèvre mâle soient en contact étanche après que ledit joint fileté ait subi ladite expansion diamétrale dans le domaine des déformations plastiques.

2. Joint fileté tubulaire selon la revendication 1 **caractérisé en ce que** la surface d'extrémité mâle (9) possède la forme d'une feuillure constituée par une surface transversale (15) du côté intérieur du joint fileté et du côté opposé de la feuillure par une languette (13) annulaire se projetant axialement et **en ce que** la surface d'épaulement femelle (10) possède une forme de feuillure constituée par une surface transversale (16) du côté dirigé vers l'intérieur du joint fileté et par une rainure (14) annulaire du côté opposé, la surface transversale de feuillure mâle (15) coopérant avec la surface transversale de feuillure femelle (16) et la languette (13) coopérant avec la rainure (14).

3. Joint fileté tubulaire selon la revendication 2 **caractérisé en ce que** les parois annulaires de la languette (13) et de la rainure (14) sont disposées de manière à ce qu'en position assemblée du joint fileté, les parois annulaires (18, 26) de la rainure frettent radialement celles (17, 25) de la languette.

4. Joint fileté tubulaire selon la revendication 3 **caractérisé en ce que** les parois annulaires (17, 25) de la languette (13) sont légèrement coniques et convergent vers l'extrémité libre de la languette et **en ce que** les parois annulaires (18, 26) de la rainure (14) sont légèrement coniques et convergent vers le fond de la rainure, l'inclinaison des parois de rainure étant égale à celle des parois de languette.

5. Joint fileté tubulaire selon l'une quelconque des revendications 2 à 4 **caractérisé en ce que** les surfaces transversales de feuillure mâles et femelles (15, 16) sont en butée l'une contre l'autre.

6. Joint fileté tubulaire selon l'une quelconque des revendications 2 à 5, **caractérisé en ce que** l'épaisseur radiale (ed) de la languette (13) est sensiblement égale à celle de la surface transversale (15) de la feuillure mâle (9).

7. Joint fileté tubulaire selon l'une quelconque des revendications 2 à 6, **caractérisé en ce que** la hauteur mesurée axialement (hd) de la languette (13) est sensiblement égale à son épaisseur radiale (ed).

8. Joint fileté tubulaire selon l'une quelconque des revendications 1 à 7, **caractérisé en ce que** le faible jeu entre surface périphérique extérieure (7) de lèvre mâle et surface périphérique intérieure (8) de logement femelle est inférieur ou égal à 0,3 mm, ce jeu étant mesuré perpendiculairement aux dites surfaces périphériques.

9. Joint fileté tubulaire selon l'une quelconque des revendications 1 à 8, **caractérisé en ce que** les surfaces périphériques extérieures (7) de lèvre mâle et intérieures (8) du logement femelle sont cylindriques.

10. Joint fileté tubulaire selon l'une quelconque des revendications 1 à 9 **caractérisé en ce que** la lèvre mâle (5) possède une épaisseur (eₗ) comprise entre 1/3 et 2/3 de l'épaisseur du premier tube (11).

11. Joint fileté tubulaire selon l'une quelconque des revendications 1 à 10 **caractérisé en ce que** la lèvre (5) possède une longueur *(l*_{*l*}*)* et une épaisseur *(e*_{*l*}*)* telles que le rapport longueur sur épaisseur de lèvre est compris entre 1 et 4.

12. Joint fileté tubulaire selon l'une quelconque des revendications 1 à 11 **caractérisé en ce que** l'élément mâle (1) présente une gorge (21) en extrémité du filetage mâle (3) entre filetage et lèvre mâle (5).

13. Joint fileté tubulaire selon la revendication 12 **caractérisé en ce que** la gorge (21) a une profondeur (hg) égale à la hauteur des filets mâles (3).

14. Joint fileté tubulaire selon la revendication 12 ou la revendication 13 **caractérisé en ce que** la gorge (21) a une longueur (Ig) et une profondeur (hg) telles que la longueur de gorge est comprise entre 2 et 8 fois sa profondeur.

15. Joint fileté tubulaire selon l'une quelconque des revendications 1 à 14 **caractérisé en ce que** le premier tube et le second tube (11, 12) ont le même diamètre intérieur (DI) tant au niveau des éléments filetés (1)(2) que du corps des tubes.

16. Joint fileté tubulaire selon la revendication 15, **caractérisé en ce que** le premier tube et le second tube (11, 12) ont le même diamètre extérieur (DE), tant au niveau des éléments filetés (1, 2) que du corps des tubes.

17. Joint fileté tubulaire selon l'une quelconque des revendications 1 à 16 **caractérisé en ce qu'**il est du type intégral.

18. Joint fileté tubulaire selon l'une quelconque des revendications 1 à 17, **caractérisé en ce que** les éléments filetés (1) (2) sont réalisés en acier comprenant des éléments avides d'azote rendant l'acier insensible au vieillissement par écrouissage et **en ce que** l'acier est traité thermiquement pour maximaliser ses caractéristiques d'allongement réparti.

19. Joint fileté tubulaire étanche pour puits d'hydrocarbures **caractérisé en ce qu'**il résulte d'un joint fileté tubulaire selon l'une quelconque des revendications 1 à 18 après que celui-ci ait subi un parachèvement avant son utilisation, ledit parachèvement comprenant une expansion diamétrale dans le domaine des déformations plastiques, la surface périphérique intérieure (8) du logement femelle frettant alors radialement la surface périphérique extérieure (7) de lèvre mâle ce qui réalise un contact étanche entre ces deux surfaces.

20. Joint fileté tubulaire étanche selon la revendication 19, **caractérisé par** l'absence de saillie intérieure de la lèvre mâle (5) par rapport à la surface périphérique intérieure (19, 20) des premier et second tubes tant au niveau de l'extrémité libre de la lèvre (9) que de son autre extrémité du côté filetage mâle.

21. Procédé de réalisation d'un joint fileté étanche pour puits d'hydrocarbures, **caractérisé en ce que** dans une première étape on approvisionne un joint fileté tubulaire selon l'une des revendications 1 à 18, dit "joint fileté tubulaire apte à l'expansion" et **en ce que**, dans une seconde étape, on fait subir au dit joint fileté tubulaire apte à l'expansion une opération d'expansion diamétrale dans le domaine des déformations plastiques, de sorte qu'en fin de l'opération d'expansion diamétrale la surface périphérique intérieure (8) de logement femelle frette la surface périphérique extérieure (7) de lèvre mâle en réalisant un contact étanche entre ces deux surfaces périphériques.

22. Procédé de réalisation d'un joint fileté tubulaire étanche selon la revendication 21 dans lequel l'opération d'expansion diamétrale est conduite en faisant passer à l'intérieur du joint tubulaire un boulet d'expansion (30) dont le diamètre maximal est supérieur au diamètre intérieur (DI) des éléments filetés du joint fileté tubulaire apte à l'expansion.

23. Procédé de réalisation d'un joint fileté tubulaire étanche selon la revendication 21 ou 22, **caractérisé en ce que** le taux d'expansion diamétral est supérieur à 10 %. déformations plastiques, la surface périphérique intérieure (8) du logement femelle frettant alors radialement la surface extérieure (7) de lèvre mâle ce qui réalise un contact étanche entre ces deux surfaces.

24. Procédé de réalisation d'un joint fileté tubulaire étanche selon l'une quelconque des revendications 21 à 23, **caractérisé en ce que** le joint fileté tubulaire apte à être expansé est du type intégral et **en ce que** le boulet d'expansion (30) est déplacé de l'élément fileté mâle (1) vers l'élément fileté femelle (2).

## Patentansprüche

1. Gewinde-Rohrverbindung für eine Kohlenwasserstoffbohrung, die ein Einsteck-Gewindeelement (1) am Ende eines ersten Rohrs und ein Aufnahme-Gewindeelement (2) am Ende eines zweiten Rohrs (12) aufweist, wobei das Einsteck-Gewindeelement zum freien Ende des Einsteckelements hin ein Außengewinde (3) und eine Einstecklippe (5) aufweist, die eine äußere Umfangsfläche (7) besitzt und quer zur Achse der Gewindeverbindung in einer ringförmigen Einsteck-Endfläche (9) endet, wobei das Aufnahme-Gewindeelement (2) ein Innengewinde (4), das dem Außengewinde (3) entspricht, und einen gewindelosen Bereich (6) als Aufnahmesitz für die Einstecklippe aufweist, wobei dieser Aufnahmesitz eine innere Umfangsfläche (8) und eine ringförmige Aufnahme-Schulterfläche (10) aufweist, die teilweise quer ausgerichtet und von einer zur Einsteck-Endfläche (9) komplementären Form ist, wobei das Außengewinde (3) in das Innengewinde (4) bis zu einer Stellung eingeschraubt ist, in der die Ringfläche des Einsteckendes (9) gegen die Aufnahme-Schulterfläche (10) in Eingriff kommt, wodurch diese Flächen ineinandergefügt werden, **dadurch gekennzeichnet, dass** die Gewindeverbindung dazu bestimmt ist, später, aber vor der Inbetriebnahme, eine diametrale Aufweitung auf dem Gebiet der plastischen Verformungen zu erfahren, wobei die äußere Umfangsfläche (7) der Einstecklippe (5) mit geringem Spiel von der inneren Umfangsfläche (8) des Aufnahmesitzes (6) entfernt ist, ohne radial auf sie einzuwirken, damit die innere Umfangsfläche (8) des Aufnahmesitzes und die äußere Umfangsfläche (7) der Einstecklippe in dichtem Kontakt miteinander stehen, nachdem die Gewindeverbindung die diametrale Aufweitung auf dem Gebiet der plastischen Verformungen erfahren hat.

2. Gewinde-Rohrverbindung nach Anspruch 1, **dadurch gekennzeichnet, dass** die Einsteck-Endfläche (9) die Form eines Falzes hat, der aus einer Querfläche (15) auf der Innenseite der Gewindeverbindung und auf der gegenüberliegenden Seite des Falzes aus einer axial vorstehenden, ringförmigen Zunge (13) besteht, und dass die Aufnahme-Schulterfläche (10) eine Falzform aufweist, die aus einer Querfläche (16) auf der nach innen gerichteten Seite der Gewindeverbindung und einer ringförmigen Nut (14) auf der gegenüberliegenden Seite besteht, wobei die Querfläche des Einsteck-Falzes (15) mit der Querfläche des Aufnahme-Falzes und die Zunge (13) mit der Nut (14) zusammenwirkt.

3. Gewinde-Rohrverbindung nach Anspruch 2, **dadurch gekennzeichnet, dass** die ringförmigen Wände der Zunge (13) und der Nut (14) so angeordnet sind, dass in der zusammengebauten Stellung der Gewindeverbindung die ringförmigen Wände (18, 26) der Nut diejenigen (17, 25) der Zunge radial fest umschließen.

4. Gewinde-Rohrverbindung nach Anspruch 3, **dadurch gekennzeichnet, dass** die ringförmigen Wände (17, 25) der Zunge (13) leicht konisch sind und zum freien Ende der Zunge hin konvergieren, und dass die ringförmigen Wände ( 18, 26) der Nut (14) leicht konisch sind und zum Boden der Nut konvergieren, wobei die Neigung der Wände der Nut gleich derjenigen der Wände der Zunge ist.

5. Gewinde-Rohrverbindung nach einem der Ansprüche 2 bis 4, **dadurch gekennzeichnet, dass** die Querflächen des Einsteckund des Aufnahme-Falzes (15, 16) gegeneinander in Anschlag liegen.

6. Gewinde-Rohrverbindung nach einem der Ansprüche 2 bis 5, **dadurch gekennzeichnet, dass** die radiale Dicke (ed) der Zunge (13) im wesentlichen gleich derjenigen der Querfläche (15) des Einsteck-Falzes (9) ist.

7. Gewinde-Rohrverbindung nach einem der Ansprüche 2 bis 6, **dadurch gekennzeichnet, dass** die axial gemessene Höhe (hd) der Zunge (13) im wesentlichen gleich ihrer radialen Dicke (ed) ist.

8. Gewinde-Rohrverbindung nach einem der Ansprüche 1 bis 7, **dadurch gekennzeichnet, dass** das geringe Spiel zwischen der äußeren Umfangsfläche (7) der Einstecklippe und der inneren Umfangsfläche (8) des Aufnahmesitzes höchstens 0,3 mm beträgt, wobei dieses Spiel senkrecht zu den Umfangsflächen gemessen wird.

9. Gewinde-Rohrverbindung nach einem der Ansprüche 1 bis 8, **dadurch gekennzeichnet, dass** die äußeren Umfangsflächen (7) der Einstecklippe und die inneren Umfangsflächen (8) des Aufnahmesitzes zylindrisch sind.

10. Gewinde-Rohrverbindung nach einem der Ansprüche 1 bis 9, **dadurch gekennzeichnet, dass** die Einstecklippe (5) eine Dicke (eₗ) aufweist, die zwischen 1/3 und 2/3 der Dicke des ersten Rohrs (11) liegt.

11. Gewinde-Rohrverbindung nach einem der Ansprüche 1 bis 10, **dadurch gekennzeichnet, dass** die Lippe (5) eine solche Länge (lₗ) und Dicke (eₗ) aufweist, dass das Verhältnis zwischen Länge und Dicke der Lippe zwischen 1 und 4 liegt.

12. Gewinde-Rohrverbindung nach einem der Ansprüche 1 bis 11, **dadurch gekennzeichnet, dass** das Einsteckelement (1) am Ende des Außengewindes (3) zwischen dem Gewinde und der Einstecklippe (5) eine Kehle (21) aufweist.

13. Gewinde-Rohrverbindung nach Anspruch 12, **dadurch gekennzeichnet, dass** die Kehle (21) eine Tiefe (hg) gleich der Höhe der Außengewindegänge (3) hat.

14. Gewinde-Rohrverbindung nach Anspruch 12 oder 13, **dadurch gekennzeichnet, dass** die Kehle (21) eine derartige Länge (lg) und eine derartige Tiefe (hg) aufweist, dass die Länge der Kehle zwischen 2 und 8 mal so groß ist wie ihre Tiefe.

15. Gewinde-Rohrverbindung nach einem der Ansprüche 1 bis 14, **dadurch gekennzeichnet, dass** das erste Rohr und das zweite Rohr (11, 12) sowohl in Höhe der Gewindeelemente (1, 2) als auch in Höhe des Rohrkörpers den gleichen Innendurchmesser (DI) aufweisen.

16. Gewinde-Rohrverbindung nach Anspruch 15, **dadurch gekennzeichnet, dass** das erste Rohr und das zweite Rohr (11, 12) sowohl in Höhe der Gewindeelemente (1, 2) als auch in Höhe des Rohrkörpers den gleichen Außendurchmesser (DE) aufweisen.

17. Gewinde-Rohrverbindung nach einem der Ansprüche 1 bis 16, **dadurch gekennzeichnet, dass** sie vom integralen Typ ist.

18. Gewinde-Rohrverbindung nach einem der Ansprüche 1 bis 17, **dadurch gekennzeichnet, dass** die Gewindeelemente (1)( 2) aus Stahl bestehen, der stickstoffhungrige Elemente enthält, die den Stahl gegenüber der Alterung durch Kaltverformung unempfindlich machen, und dass der Stahl wärmebehandelt wird, um seine Eigenschaften der verteilten Dehnung zu maximieren.

19. Dichte Gewinde-Rohrverbindung für eine Kohlenwasserstoffbohrung, **dadurch gekennzeichnet, dass** sie aus einer Gewinde-Rohrverbindung nach einem der Ansprüche 1 bis 18 entsteht, nachdem diese vor ihrer Benutzung einer Fertigstellung unterzogen wurde, wobei diese Fertigstellung eine diametrale Aufweitung auf dem Gebiet der plastischen Verformungen enthält, wobei die innere Umfangsfläche (8) des Aufnahmesitzes dann die Außenumfangsfläche der Einstecklippe (7) radial fest umschließt, was einen dichten Kontakt zwischen diesen beiden Flächen herstellt.

20. Dichte Gewinde-Rohrverbindung nach Anspruch 19, **gekennzeichnet durch** die Abwesenheit eines inneren Vorsprungs der Einstecklippe (5) bezüglich der inneren Umfangsfläche (19, 20) des ersten und des zweiten Rohrs sowohl in Höhe des freien Endes der Lippe (9) als auch ihres anderen Endes auf der Seite des Einsteckgewindes.

21. Verfahren zur Herstellung einer dichten Gewindeverbindung für Kohlenwasserstoffbohrungen, **dadurch gekennzeichnet, dass** in einem ersten Schritt eine "aufweitbare Gewinde-Rohrverbindung" genannte Gewinde-Rohrverbindung nach einem der Ansprüche 1 bis 8 bereitgestellt wird, und dass in einem zweiten Schritt die aufweitungsfähige Gewinde-Rohrverbindung einem diametralen Aufweitungsvorgang auf dem Gebiet der plastischen Verformungen unterzogen wird, so dass am Ende des diametralen Aufweitungsvorgangs die innere Umfangsfläche (8) des Aufnahmesitzes die Außenumfangsfläche (7) der Einstecklippe fest umschließt, wodurch ein dichter Kontakt zwischen diesen beiden Umfangsflächen hergestellt wird.

22. Verfahren zur Herstellung einer dichten Gewinde-Rohrverbindung nach Anspruch 21, bei dem der Vorgang der diametralen Aufweitung erfolgt, indem durch das Innere der Gewindeverbindung eine Aufweitungs-Kugel (30) geführt wird, deren maximaler Durchmesser größer ist als der Innendurchmesser (DI) der Gewindeelemente der aufweitbaren Gewinde-Rohrverbindung.

23. Verfahren zur Herstellung einer dichten Gewinde-Rohrverbindung nach Anspruch 21 oder 22, **dadurch gekennzeichnet, dass** der diametrale Aufweitungsgrad mehr als 10% beträgt.

24. Verfahren zur Herstellung einer dichten Gewinde-Rohrverbindung nach einem der Ansprüche 21 bis 23, **dadurch gekennzeichnet, dass** die aufweitbare Gewinde-Rohrverbindung vom integralen Typ ist, und dass die Aufweitungs-Kugel (30) vom Einsteck-Gewindeelement (1) zum Aufnahme-Gewindeelement (2) bewegt wird.

## Claims

1. A threaded tubular connection for hydrocarbon wells, comprising a male threaded element (1) at one end of a first pipe (11) and a female threaded element (2) at one end of a second pipe (12), the male threaded element comprising, going towards the free end of said male element, a male threading (3) and a male lip (5) which comprises an external peripheral surface (7) terminating transversely with respect to the axis of the threaded connection by a male end surface (9) that is annular in shape, the female threaded element (2) comprising a female threading (4) corresponding to the male threading (3) and a non-threaded female housing portion (6) for housing the male lip, said female housing comprising an internal peripheral surface (8) and an annular female shoulder surface (10) with a partially transverse orientation and a shape complementary to that of the male end surface (9), the male threading (3) being made up into the female threading (4) to a position in which the male annular end surface (9) is engaged against the female shoulder surface (10) by embedment of these surfaces in each other, **characterized in that** said threaded connection being designed to undergo later on but prior to its being in service a diametrical expansion in the plastic deformation region, the external peripheral surface (7) of the male lip (5) is disposed with a small clearance from the internal peripheral surface (8) of the female housing (6) without radially interfering with the latter, such that said internal peripheral surface (8) of the female housing and said external peripheral surface (7) of the male lip are in tight contact after said threaded connection has undergone said diametrical expansion in the plastic deformation region.

2. A threaded tubular connection according to claim 1, **characterized in that** the male end surface (9) has the shape of a rabbet constituted by a transverse surface (15) on the internal side of the threaded connection and on the side opposite the rabbet by an axially projecting annular tongue (13) and **in that** the female shoulder surface (10) has the shape of a rabbet constituted by a transverse surface (16) on the side directed towards the interior of the threaded connection and by an annular groove (14) on the opposite side, the transverse surface of the male rabbet (15) co-operating with the transverse surface of the female rabbet (16) and the tongue (13) co-operating with the groove (14).

3. A threaded tubular connection according to claim 2, **characterized in that** the annular walls of the tongue (13) and the groove (14) are disposed such that in the connected position of the threaded connection, the annular walls (18, 26) of the groove radially interfere with those (17, 25) of the tongue.

4. A threaded tubular connection according to claim 3, **characterized in that** the annular walls (17, 25) of the tongue (13) are slightly tapered and converge towards the free end of the tongue and **in that** the annular walls (18, 26) of the groove (14) are slightly tapered and converge towards the base of the groove, the inclination of the walls of the groove being equal to that of the walls of the tongue.

5. A threaded tubular connection according to any one of claims 2 to 4, **characterized in that** the transverse surfaces of the male and female rabbets (15, 16) abut against each other.

6. A threaded tubular connection according to any one of claims 2 to 5, **characterized in that** the radial thickness (ed) of the tongue (13) is substantially equal to that of the transverse surface (15) of the male lip (9).

7. A threaded tubular connection according to any one of claims 2 to 6, **characterized in that** the axially measured length (hd) of the tongue (13) is substantially equal to its radial thickness (ed).

8. A threaded tubular connection according to any one of claims 1 to 7, **characterized in that** the small clearance between the external peripheral surface (7) of the male lip and the internal peripheral surface (8) of the female housing is less than or equal to 0.3 mm, said clearance being measured perpendicularly to said peripheral surfaces.

9. A threaded tubular connection according to any one of claims 1 to 8, **characterized in that** the external peripheral surfaces (7) of the male lip and internal peripheral surfaces (8) of the female housing are cylindrical.

10. A threaded tubular connection according to any one of claims 1 to 9, **characterized in that** the male lip (5) has a thickness (eₗ) in the range 1/3 to 2/3 of the thickness of the first pipe (11).

11. A threaded tubular connection according to any one of claims 1 to 10, **characterized in that** the lip (5) has a length (lₗ) and thickness (eₗ) such that the ratio of the length of the lip to its thickness is in the range 1 to 4.

12. A threaded tubular connection according to any one of claims 1 to 11, **characterized in that** the male element (1) has a groove (21) at the end of the male threading (3) between the threading and the male lip (5).

13. A threaded tubular connection according to claim 12, **characterized in that** the groove (21) has a depth (hg) equal to the height of the male threads (3).

14. A threaded tubular connection according claim 12 or claim 13, **characterized in that** the groove (21) has a length (lg) and a depth (hg) such that the groove length is in the range 2 to 8 times its depth.

15. A threaded tubular connection according to any one of claims 1 to 14, **characterized in that** the first pipe and the second pipe (11, 12) have the same internal diameter (DI) both at the threaded elements (1) (2) and in the pipe body.

16. A threaded tubular connection according to claim 15, **characterized in that** the first pipe and the second pipe (11, 12) have the same external diameter (DE), both at the threaded elements (1, 2) and in the pipe body.

17. A threaded tubular connection according to any one of claims 1 to 16, **characterized in that** it is of the integral type.

18. A threaded tubular connection according to any one of claims 1 to 17, **characterized in that** the threaded elements (1) (2) are produced from steel comprising elements for fixing nitrogen rendering the steel insensitive to ageing by work hardening and **in that** the steel is heat treated to maximise its uniform elongation characteristics.

19. A sealed threaded tubular connection for hydrocarbon wells, **characterized in that** it results from a threaded tubular connection according to any one of claims 1 to 18 after it has undergone a finishing operation before being used, said finishing operation comprising a diametrical expansion in the plastic deformation region, the internal peripheral surface (8) of the female housing then radially interfering with the external peripheral surface (7) of the male lip, thus achieving a tight contact between these two surfaces.

20. A sealed threaded tubular connection according to claim 19, **characterized by** the absence of internal projection of the male lip (5) with respect to the internal peripheral surface (19, 20) of the first and second pipes, both at the free end of the lip (9) and at its other end on the side of the male threading.

21. A process for producing a sealed threaded tubular connection for hydrocarbon wells, **characterized in that**, in a first step a threaded tubular connection according to any one of claims 1 to 18 is provided, termed an "expandable threaded tubular connection" and **in that** in a second step said expandable threaded tubular connection undergoes a diametrical expansion in the plastic deformation region such that at the end of the step of diametrical expansion the internal peripheral surface (8) of the female housing interferes with the external peripheral surface (7) of the male lip achieving a tight contact between these two peripheral surfaces.

22. A process for producing a sealed threaded tubular connection according to claim 21, in which the step of diametrical expansion is carried out by passing within the threaded tubular connection an expansion ball (30) having a maximum diameter that is greater than the internal diameter (DI) of the threaded elements of the expandable threaded tubular connection.

23. A process for producing a sealed threaded tubular connection according to claim 21 or 22, **characterized in that** the diametrical expansion rate is over 10 %.

24. A process for producing a sealed threaded tubular connection according to any one of claims 21 to 23, **characterized in that** the expandable threaded tubular connection is of the integral type and **in that** the expansion ball (30) is displaced from the male threaded element (1) towards the female threaded element (2).
